# EUROPÄISCHE PATENTSCHRIFT

(11) **EP 3 317 601 B1**
(45) Veröffentlichungstag und Bekanntmachung des Hinweises auf die Patenterteilung: **19.06.2024**
(21) Anmeldenummer: 15753322.5
(22) Anmeldetag: 02.07.2015
(51) Int. Cl.: F26B 17/12, F26B 3/14, F26B 21/04

(54) **VERFAHREN UND ANLAGE ZUM AUFBEREITEN UND TROCKNEN VON FESTEN KLEINSTÜCKIGEN MATERIALIEN**
PROCESS AND APPARATUS FOR HANDLING AND DRYING SOLID PARTICULATE MATERIAL
MÉTHODE ET APPAREIL POUR LE TRAITEMENT ET LE SÉCHAGE DE MATÉRIAUX SOLIDES EN FORME DE PARTICULES

(43) Veröffentlichungstag der Anmeldung: 09.05.2018
(73) Patentinhaber: Cebcon Technologies GmbH, 22335 Hamburg (DE)
(72) Erfinder: DETZEL, Valery, 22471 Hamburg (DE)
(74) Vertreter: Hauck Patentanwaltspartnerschaft mbB
(86) Internationale Anmeldenummer: PCT/EP2015/065100
(87) Internationale Veröffentlichungsnummer: WO 2017/001019

(56) Entgegenhaltungen:
- EP-A1- 2 647 935
- EP-A1- 2 719 983
- FR-A1- 2 630 621
- US-A- 2 764 819

## Beschreibung

Die Erfindung bezieht sich auf ein Verfahren und eine Anlage zum Trocknen von Holzspänen, Holzhackschnitzeln oder anderen festen, kleinstückigen Materialien organischen und/oder mineralischen Ursprungs. Die Materialien bestehen aus einer Vielzahl fester Partikel und sind schüttfähig. Sie werden auch als Schüttgut oder Haufwerk bezeichnet. Das erfindungsgemäße Verfahren und die erfindungsgemäße Anlage sind insbesondere geeignet für den Einsatz in einem Verfahren und einer Anlage zur Herstellung von Holzpellets oder anderen festen Granulaten aus kleinstückigem Material organischen und/oder mineralischen Ursprungs.

Holzpellets sind stäbchenförmige Granulate, die aus Säge- oder Hobelspänen, Hackschnitzeln, Holzschreddergut oder anderen Nebenprodukten oder Abfällen der Holz- und Frostwirtschaft bestehen. Andere feste Granulate aus kleinstückigem Material organischen und/oder mineralischen Ursprungs können zum Beispiel aus Stroh, Sonnenblumenschalen, Olivenkernen, Olivenpresstrester, Reisschalen, Fleisch- oder Fischabfällen und andere biogenen Reststoffen der Agrarwirtschaft, Fleisch-, Fisch- oder Lebensmittelindustrie unter anderem mit Zugabe von mineralischen Bestandteilen in unterschiedlichen Kombinationen und Anteilen hergestellt werden. Bei der Herstellung von Holzpellets wird das zugeführte Material zwecks Pelletierung aufbereitet, insbesondere durch Trocknen, gegebenenfalls auch durch Zerkleinern und Konditionieren. Aus dem aufbereiteten Material werden die Pellets gepresst. Hierzu wird z.B. eine Kollergangpresse verwendet, in der das Material durch eine Matrize mit Bohrungen gemäß dem gewünschten Pelettdurchmesser hindurch gepresst wird. Das im Material enthaltenen Lignin wird durch die Erwärmung beim Konditionieren bzw. Pressen freigesetzt und verbindet die einzelnen Holzteilchen miteinander. Ferner ist bekannt, dem zu granulierenden Material Bindemittel zuzusetzen, um die Teilchen miteinander zu verbinden. Nach dem Austritt aus der Matrize schneidet ein Messer die Pelletsstränge auf die gewünschte Länge. Danach werden die Pellets gekühlt und damit verfestigt.

Die DE 10 2013 224 204 A1 beschreibt eine Anlage zur Herstellung von Holzpellets oder anderen festen Granulaten, die mit geringerem Aufwand transportierbar, aufstellbar und an einen anderen Ort versetzbar ist, sowie einen energieoptimierten Betrieb ermöglicht. Die Anlage ist zumindest teilweise in einzeln transportierbaren und baukastenartig zu zumindest einem wesentlich Teil der Anlage zusammensetzbaren Containern angeordnet, wobei mindestens die Einrichtung zum Kühlen in Ausführung als Schachtkühler vollständig in einem Container angeordnet ist. Zumindest eine der Einrichtungen zum Aufgeben, Aufbereiten, Trocknen, Pressen, Kühlen und Abgeben ist in einem Container mit vertikaler Längsachse angeordnet. Im Ausführungsbeispiel ist der Trockner ein Bandtrockner und ist dem Trockner eine Lagersilo zur Zwischenlagerung nachgeordnet. Aus dem Lagersilo wird das Material zur Trockenmühle befördert, wo es auf die optimale Korngröße zerkleinert wird.

Beim Trocknen im Bandtrockner entstehenden Wärmeverluste dadurch, dass die aufgeheizte Luft nach dem Durchqueren des Bandes und des darauf liegenden Trocknungsgutes in die Atmosphäre freigesetzt wird. Da eine heterogene Trocknung erfolgt, wird in der Praxis vielfach nur die oberste Schicht abgekratzt und die darunter liegende Schicht erneut der Trocknung zugeführt. Zu den hohen Wärmeverlusten kommen Energieverluste für den Betrieb der starken Ventilatoren hinzu.

Bekannt ist auch die Trocknung in Trommeltrocknern. Diese arbeiten mit einem Brenner, der das Heizgas auf eine sehr hohe Temperatur von beispielsweise 400°C erhitzt. Die Abwärme hat immer noch eine hohe Temperatur von z.B. 90°C und wird nicht genutzt. Nachteilig ist auch, dass flüchtige organische Verbindungen (VOC), und Lignin aus Holzpartikeln herausgelöst werden. Hindurch wird die Qualität des Materials gemindert. Das Lignin fehlt bei der Pelletierung als Bindemittel.

Die DE 10 2006 061 340 B3 beschreibt eine Einrichtung zum Herstellen von Holzpellets mit zumindest jeweils einem Baugruppen-Modul zum Aufgeben, Trocknen, Pressen und Austragen. Die Baugruppen-Module sind in vertikaler Anordnung der jeweiligen Funktions-Baugruppen in weltweit handelsüblichen Containern (12-20-Fuss-Container) eingebracht. Mehrere, eine horizontale und/oder vertikale Reihe bildende Container sind mittels elektrischer und/oder pneumatischer Medienleitungen unter einander verbunden und einer der Container ist an eine örtlich vorhandene Medienquelle anschließbar. Vorteilhaft sind die leichte und schnelle Montage der Anlage, die aus vorbereiteten Baugruppen-Modulen besteht.

Die Anlage umfasst einen Trockner, der vertikale Trocknungsschächte für Holzspäne umfasst, der sich über zwei horizontal aufeinander gesetzte Container erstreckt. Oben treten Holzspäne in den Trocknungsschacht ein und treten am unteren Ende wieder aus. Für eine Entfeuchtung der Holzspäne sorgen Ventilatoren und Wärmetauscher, die auf verschiedenen Seiten des Trocknungsschachtes angeordnet sind. Der obere Ventilator saugt vom oberen Wärmetauscher erwärmte Luft durch den Trocknungsschacht und der untere Ventilator saugt von dem unteren Wärmetauscher erwärmte Luft in entgegengesetzter Richtung durch den Trocknungsschacht. Hierdurch soll eine hohe Durchsatzleistung erzielt werden. Die durch den Trocknungsschacht hindurch gesaugte Trocknungsluft wird an die Umgebung abgegeben. Die Flexibilität im Hinblick auf eine Anpassung des Trockners an verschiedene Durchsätze ist gering.

Die EP 2 719 983 A1 beschreibt eine Trocknungsanlage für Schüttgut, insbesondere landwirtschaftliche Körnerfrüchte, die mehrere Trocknungszonen umfasst, die aufeinanderfolgend von zu trocknendem Schüttgut durchlaufen werden. Eine Luftführung leitet Luft durch die Trocknungszonen. Ein erster Lufteinleiter leitet Frischluft aus der Umgebung als Zuluft in einen ersten Teil der Trocknungszonen. Der erste Lufteinleiter ist als Zuluftschacht ausgebildet. Ein Luftweiterleiter ist zum Weiterleiten von Abluft aus dem ersten Teil der Trocknungszonen in einen zweiten Teil der Trocknungszonen vorgesehen. Ein zweiter Lufteinleiter leitet weitere Frischluft aus der Umgebung in den zweiten Teil der Trocknungszonen. Der zweite Lufteinleiter kann zur Beeinflussung der zugeführten weiteren Frischluft mit einer Drossel- bzw. Regelklappe versehen werden. Mittels eines dritten Lufteinleiters wird Frischluft den Trocknungszonen zugeführt. Der dritte Lufteinleiter ist eine Luftleitungseinrichtung wie ein Rohr oder ein Kanal.

Davon ausgehend liegt der Erfindung die Aufgabe zu Grunde, ein Verfahren und ein Anlage zum Trocknen von Holzspänen, Holzhackschnitzeln oder anderen festen, kleinstückigen Materialien organischen und/oder mineralischen Ursprungs mit verbesserter Energieeffizienz und erhöhter Flexibilität zu schaffen.

Die Aufgabe wir durch ein Verfahren mit den Merkmalen von Anspruch 1 gelöst. Vorteilhafte Ausgestaltungen des Verfahrens sind in Unteransprüchen angegeben.

Das erfindungsgemäße Verfahren zum Trocknen von Holzspänen, Holzhackschnitzeln oder anderen festen, kleinstückigen Materialien organischen und/oder mineralischen Ursprungs umfasst die folgenden Schritte:
- in einem ersten Trocknungsschritt wird das Material mittels eines ersten vorgewärmten Trocknungsgases vorgetrocknet,
- in einem zweiten Trocknungsschritt wird das getrocknete Material aus dem ersten Trocknungsschritt mittels eines zweiten Trocknungsgases getrocknet,
- in einem dritten Trocknungsschritt wird das getrocknete Material aus dem zweiten Trocknungsschritt getrocknet,
- das getrocknete Material aus dem dritten Trocknungsschritt wird mittels eines Kühlgases gekühlt,
- Umgebungsluft wird erwärmt und als zweites vorgewärmtes Trocknungsgas dem dritten Trocknungsschritt zugeführt,
- das im dritten Trocknungsschritt auf eine oberhalb der Temperatur der Umgebungsluft abgekühlte zweite Trocknungsgas wird dem zweiten Trocknungsschritt als zweites Trocknungsgas zugeführt,
- das durch Kühlen des Materials erwärmte Kühlgas und/oder das im dritten Trocknungsschritt abgekühlte zweite Trocknungsgas wird als erstes vorgewärmtes Trocknungsgas dem ersten Trocknungsschritt zugeführt.

Bei dem erfindungsgemäßen Verfahren wird durch mehrfache Nutzung der Energie zum Aufheizen der Umgebungsluft Energie eingespart. Hierfür wird das zweite Trocknungsgas nach Abkühlung im zweiten Trocknungsschritt auch im ersten Trocknungsschritt eingesetzt und/oder die im Material gebundene Wärmeenergie zum Trocknen im ersten Trocknungsschritt genutzt. Bevorzugt ist das Trocknungsgas Luft oder ein Gemisch aus Verbrennungsgas und Luft.

Gemäß einer bevorzugten Ausgestaltung der Erfindung wird in einem dritten Trocknungsschritt das getrocknete Material aus dem zweiten Trocknungsschritt mittels des zweiten vorgewärmten Trocknungsgases getrocknet und das im dritten Trocknungsschritt auf eine oberhalb der Temperatur der Umgebungsluft abgekühlte zweite vorgewärmte Trocknungsgas dem zweiten Trocknungsschritt zugeführt. Bei dieser Ausgestaltung wird die Energie des zweiten vorgewärmten Trocknungsgases für den dritten Trocknungsschritt und den zweiten Trocknungsschritt genutzt und die Energieeffizienz weiter verbessert. Das getrocknete Material aus dem zweiten Trocknungsschritt wird erst nach Durchlaufen des dritten Trocknungsschrittes mittels des Kühlgases gekühlt.

Ferner bezieht die Erfindung Ausgestaltungen ein, bei denen das Material mehr als drei Trocknungsschritte durchläuft. Das zweite vorgewärmte Trocknungsgas wird vorzugsweise zunächst für den jeweils letzten Trocknungsschritt eingesetzt und nach Abkühlung auf eine Temperatur oberhalb Umgebungstemperatur für mindestens einen vorgeordneten Trocknungsschritt.

Gemäß einer weiteren Ausgestaltung durchläuft das getrocknete Material aus dem ersten oder dem zweiten Trocknungsschritt eine Ruhezeit, in der der Wassergehalt innerhalb der Teilchen des Materials mehr oder weniger vergleichmäßigt wird, und wird das Material nach dem Durchlaufen der Ruhezeit in dem zweiten oder dritten Trocknungsschritt getrocknet. Während der Ruhezeit, die bevorzugt eine halbe bis zwei Stunden, weiterhin bevorzugt eine bis eineinhalb Stunden beträgt, kommt es mehr oder weniger zu einer Vergleichmäßigung des Wassergehalts des Querschnitts der Teilchen, so dass Wasser aus dem Kern an die Oberfläche der Teilchen wandert. Hierdurch wird die Effizienz des nachfolgenden Trocknungsschrittes verbessert.

Gemäß einer weiteren Ausgestaltung wird das getrocknete Material aus dem ersten Trocknungsschritt oder aus dem zweiten Trocknungsschritt zerkleinert und danach dem zweiten Trocknungsschritt oder dem dritten Trocknungsschritt zugeführt. Durch Zerkleinern des Materials wird die Feuchtigkeit im Inneren der Teilchen an der Oberfläche freigelegt, so dass die nachfolgende Trocknung effizienter durchgeführt werden kann.

Gemäß einer weiteren Ausgestaltung wird das getrocknete Material zwischen zwei Trocknungsschritten zerkleinert und durchläuft eine Ruhezeit. Das Zerkleinern und Durchlaufen der Ruhezeit kann in beliebiger Abfolge erfolgen. Vorzugsweise werden die Teilchen zunächst zerkleinert und durchlaufen danach eine Ruhezeit. Bevorzugt wird das getrocknete Material zwischen denselben Trocknungsschritten zerkleinert und durchläuft eine Ruhezeit. Die Erfindung umfasst ferner Ausführungen bei denen die Zerkleinerung zwischen zwei anderen Trocknungsschritten als das Durchlaufen der Ruhezeit erfolgt.

Gemäß einer weiteren Ausgestaltung wird das abgekühlte und angefeuchtete Trocknungsgas aus dem ersten Trocknungsschritt und/oder aus dem zweiten Trocknungsschritt in die Umgebung abgelassen. Bei dieser Ausgestaltung wird weitgehend abgekühltes Trocknungsgas in die Umgebung freigesetzt.

Gemäß einer weiteren Ausgestaltung wird das abgekühlte und angefeuchtete Trocknungsgas aus dem zweiten Trocknungsschritt getrocknet und das getrocknete Trocknungsgas mit der Umgebungsluft gemischt und als zweites Trocknungsgas dem zweiten oder dritten Trocknungsschritt zugeführt. Bei dieser Ausgestaltung wird die restliche Wärmeenergie des Trocknungsgases aus dem zweiten Trocknungsschritt für die Erwärmung der Umgebungsluft genutzt.

Gemäß einer weiteren Ausgestaltung wird das durch Trocknen des Trocknungsgases aus dem zweiten Trocknungsschritt anfallende, kondensierte Wasser einer Wärmepumpe zugeführt und die von der Wärmepumpe auf einem erhöhten Temperaturniveau gelieferte Wärme zum Erwärmen der Umgebungsluft herangezogen. Hierdurch wird auch die im Wasser in der Trocknungsluft gebundene Energie für den Prozess wiedergewonnen und die Energieeffizienz weiter verbessert.

Gemäß einer weiteren Ausgestaltung wird ein Teil des abgekühlten, zweiten Trocknungsgases aus dem dritten Trocknungsschritt mit dem erwärmten Kühlgas gemischt und als erstes Trocknungsgas dem ersten Trocknungsschritt zugeführt. Hierdurch wird die Ausnutzung der Wärmeenergie des zweiten Trocknungsgases weiter verbessert.

Gemäß einer weiteren Ausgestaltung wird die Umgebungsluft und/oder das getrocknete Trocknungsgas mittels Wärmetauscher und/oder mittels eines Heizbrenners erhitzt. Gemäß einer Ausgestaltung wird der Wärmetauscher mittels der von der Wärmepumpe gelieferten Energie betrieben und/oder mit der Abwärme aus einem Produktionsprozess und/oder mit der Wärme aus einem Blockheizkraftwerk. Bei Einsatz eines Heizbrenners können Holzstaub oder Holzpellets aus dem Verfahren oder ein anderer fossiler Brennstoff verwendet werden. Der Einsatz eines Heizbrenners hat den Vorteil, dass das Trocknungsgas einen hohen Anteil an Heizgasen aufweist, was in Folge des stark reduzierten Sauerstoffgehalts der Heizgase das Risiko einer Entzündung von entzündlichem bzw. leicht brennbarem Material reduziert.

Gemäß einer weiteren Ausgestaltung erfolgt der erste und/oder der zweite und/oder der dritte Trocknungsschritt in der Weise, dass das Material eine vertikale Trocknungsstrecke von oben nach unten durchläuft und das Trocknungsgas im Kreuzgegenstrom durch die Trocknungsstrecke hindurch geführt wird, wobei die Trocknungsstrecke in einzelne Abschnitte unterteilt ist, in denen der Massenstrom des Trocknungsgases, der in einem Abschnitt der Trocknungsstrecke quer durch diese hindurchgeführt wird, einstellbar ist. Hierdurch können in den verschiedenen Abschnitten der Trocknungsstrecke größere oder kleinere Mengenströme des Trocknungsgases durch die Trocknungsstrecke hindurch geleitet werden. Dies ermöglicht eine Anpassung an das jeweils eingesetzte Material. Bei einem gröberen Material (z.B. Hackschnitzel) ist eine mehrfache Umlenkung des Trocknungsgases mit relativ hohen Geschwindigkeiten des Trocknungsgases beim Durchqueren der Trocknungsstrecke vorteilhaft, weil hierdurch eine Trocknung erfolgt und grobes Material weniger leicht seitlich aus der Trocknungsstrecke ausgetragen wird. Umgekehrt kann bei feinerem Material (z.B. Späne) eine weniger häufige Umlenkung und damit eine geringere Strömungsgeschwindigkeit des Trocknungsgases beim Durchqueren des Trocknungsschachtes vorteilhaft sein.

Gemäß einer weiteren Ausgestaltung wird die Umgebungsluft erwärmt, indem sie von einem Gebläse in im wesentlichen horizontaler Richtung durch eine kastenförmige, vertikale Anordnung von vier Wärmetauschern gesaugt und beim Hindurchtreten durch die Wärmetauscher erwärmt und anschließend in vertikaler Richtung von dem unterhalb der Wärmetauscher angeordneten Gebläse angesaugt und von diesen dem zweiten oder dritten Trocknungsschritt zugeführt wird. Hierdurch wird eine hohe Wärmeübertragungsleistung erreicht, wodurch der Raumbedarf einer Vorrichtung zur Durchführung des Verfahrens nur gering ist.

Ferner wird die Aufgabe durch eine Anlage mit den Merkmalen von Anspruch 9 gelöst. Vorteilhafte Ausgestaltungen der Anlage sind in Unteransprüchen angegeben.

Die erfindungsgemäße Anlage zum Trocknen von Holzspänen, Holzhackschnitzeln oder anderen festen, kleinstückigen Materialien organischem oder mineralischem Ursprungs geeignet zur Durchführung des Verfahrens gemäß einem der Ansprüche 1 bis 8 umfasst:
- eine erste Trocknungseinheit, die ausgebildet ist, in einem ersten Trocknungsschritt das Material mittels eines ersten vorgewärmten Trocknungsgases vorzutrocknen,
- eine zweite Trocknungseinheit, die ausgebildet ist, in einem zweiten Trocknungsschritt das getrocknete Material aus der ersten Trocknungseinheit mittels eines zweiten Trocknungsgases zu trocknen,
- eine dritte Trocknungseinheit, die ausgebildet ist, in einem dritten Trocknungsschritt das getrocknete Material aus der zweiten Trocknungseinheit mittels des zweiten vorgewärmten Trocknungsgases zu trocknen und das auf eine Temperatur oberhalb der Umgebungstemperatur abgekühlte zweite Trocknungsgas der zweiten Trocknungseinheit zuzuführen,
- eine Gasvorbereitungseinheit (Gaserwärmungseinheit), die ausgebildet ist, Umgebungsluft zu erwärmen und als zweites vorgewärmtes Trocknungsgas für die dritte Trocknungseinheit bereit zu stellen,
- eine Kühleinheit, die ausgebildet ist, das getrocknete Material aus der dritten Trocknungsstufe mittels eines Kühlgases zu kühlen, und
- Leitungen, die das in der Kühleinheit erwärmte Kühlgas und/oder das in der dritten Trocknungseinheit auf eine Temperatur oberhalb der Umgebungstemperatur abgekühlte, zweite Trocknungsgas als erstes vorgewärmtes Trocknungsgas der ersten Trocknungseinheit zuführen.

Die Anlage ist eine bevorzugte Form der Umsetzung des eingangs erwähnten Verfahrens und weist seine energetischen Vorteile auf.

Gemäß einer weiteren Ausgestaltung umfasst die Anlage einen Ruhebehälter, der so ausgebildet, dass in dem Ruhebehälter das getrocknete Material aus dem ersten Trocknungsschritt oder aus dem zweiten Trocknungsschritt eine Ruhezeit durchläuft, in der sich der Wassergehalt innerhalb der Teilchen des Materials mehr oder weniger vergleichmäßigt, wobei das Material nach dem Durchlaufen der Ruhezeit für die weitere Trocknung im zweiten Trocknungsschritt oder im dritten Trocknungsschritt bereitgestellt wird. Hierdurch wird die Effizienz der Trocknung weiter verbessert.

Gemäß einer weiteren Ausgestaltung umfasst die Anlage eine Zerkleinerungseinrichtung, die ausgebildet ist, das getrocknete Material aus der ersten Trocknungseinheit oder aus der zweiten Trocknungseinheit zu Zerkleinern und für die Trocknung in der zweiten Trocknungseinheit oder in der dritten Trocknungseinheit bereitzustellen. Hierdurch wird die Effizienz der Trocknung weiter verbessert.

Gemäß einer bevorzugten Ausgestaltung umfasst die Trocknungsanlage sowohl einen Ruhebehälter als auch eine Zerkleinerungseinrichtung, wobei die Reihenfolge grundsätzlich beliebig ist, vorzugsweise jedoch die Zerkleinerungseinrichtung vor dem Ruhebehälter vom Material durchlaufen wird. Ferner kann die Zerkleinerungseinrichtung zwischen zwei anderen Trocknungseinheiten als der Ruhebehälter angeordnet sein.

Gemäß einer weiteren Ausgestaltung umfasst die erste Trocknungseinheit und/oder die zweite Trocknungseinheit einen Auslass zur Umgebung zum Ablassen von abgekühltem und angefeuchtetem Trocknungsgas. Aufgrund der niedrigen Temperatur des Trocknungsgases in der ersten Trocknungseinheit und/oder der zweiten Trocknungseinheit besitzt es nur noch eine geringe Energie und kann in die Umgebung abgelassen werden.

Gemäß einer weiteren Ausgestaltung umfasst die Anlage eine Gastrocknungseinheit, die ausgebildet ist, das abgekühlte und angefeuchtete Trocknungsgas aus der zweiten Trocknungseinheit zu trocknen und für die Gasvorbereitungseinheit für eine Mischung mit der Umgebungsluft bereitzustellen. Hierdurch kann Wärmeenergie des abgekühlten Trocknungsgases aus der zweiten Trocknungseinheit zum Erwärmen der Umgebungsluft genutzt werden.

Gemäß einer weiteren Ausgestaltung umfasst die Anlage eine Wärmepumpe, die ausgebildet ist, die Wärme des in der Gastrocknungseinheit auskondensierten Wassers auf ein erhöhtes Temperaturniveau anzuheben und der Gasvorbereitungseinheit zur Verfügung zu stellen, um die Umgebungsluft zu erwärmen. Hierdurch wird die Energieeffizienz der Anlage weiter erhöht.

Gemäß einer weiteren Ausgestaltung ist die dritte Trocknungseinheit über eine Leitung mit der Leitung zwischen der Kühleinheit und der ersten Trocknungseinheit verbunden, um abgekühlte, zweite Trocknungsluft aus der dritten Trocknungseinheit mit der erwärmten Luft aus der Kühleinheit zu mischen und als erste Trocknungsluft der ersten Trocknungseinheit zuzuführen.

Gemäß einer weiteren Ausführungsart weist die Gasvorbereitungseinheit (Gaserwärmungseinheit) zum Erzeugen eines erwärmten Trocknungsgases ein quaderförmiges Gehäuse mit in vier vertikalen Seitenwänden in einem Abstand vom unteren Ende angeordneten, jeweils in horizontaler Richtung gasdurchlässigen Wärmetauschern, ein unterhalb der Wärmetauscher im Gehäuse angeordnetes Gebläse mit einem Lufteintritt an der Oberseite und einem Luftaustritt, der über eine Leitung mit einer Trocknungseinheit verbunden ist, auf. Die Gasvorbereitungseinheit ermöglicht die Übertragung hoher Wärmeleistungen bei geringem Raumbedarf.

Gemäß einer bevorzugten Ausgestaltung umfasst jeder Wärmetauscher der Gasvorbereitungseinheit ein Register und auf der Innenseite des Registers ein Rohrbündel. Dies ist vorteilhaft für eine energetisch günstige Vor- und Nacherwärmung des eingesogenen Trocknungsgases. Das Rohrbündel ist vorzugsweise zugleich Bestandteil sämtlicher Wärmetauscher.

Gemäß einer weiteren Ausführungsart umfasst eine Trocknungseinheit mindestens einem vertikalen Trocknungsschacht und vertikalen Gasschächten auf beiden Seiten des Trocknungsschachtes, wobei die Schachtwände zwischen dem Trocknungsschacht und den Gasschächten perforiert sind, der Trocknungsschacht oben einen Einlass für zu trocknendes Material und unten einen Auslass für getrocknetes Material aufweist, mindestens einer der Gasschächte am unteren Ende einen Gaseinlass und mindestens einer der Gasschächte am oberen Ende einen Gasauslass aufweist, und innerhalb der Gasschächte horizontale Absperreinrichtungen mit einstellbarem Durchlassquerschnitt angeordnet sind.

Bei der Trocknungseinheit kann der Durchlassquerschnitt von einer maximal geöffneten Einstellung bis zu einer maximal geschlossenen Einstellung verändert werden. Bevorzugt ist der Durchlassquerschnitt zwischen der maximal geschlossenen und der maximal geöffneten Stellung stufenlos verstellbar. In der maximal geschlossenen Stellung wird bevorzugt der Durchlassquerschnitt vollständig gesperrt, abgesehen von zwangsläufigen Undichtigkeiten, die die Absperreinrichtung aufweisen kann. Mittels der Absperreinrichtungen ist es möglich, den Mengenstrom des Trocknungsgases, der unterhalb einer Absperreinrichtung quer durch den Trocknungsschacht hindurch abgelenkt wird, einzustellen. Mittels der Absperreinrichtungen kann die Durchströmungsrichtung des Trocknungsgases durch den Trocknungsschacht mehrfach in der einen und der anderen Richtung geändert werden. Auch ist es möglich, die Strömungsgeschwindigkeit des Trocknungsgases in Höhenabschnitten des Trocknungsschachtes durch Einstellung der Absperreinrichtungen einzustellen. Hierdurch kann die Trocknung in der Trocknungseinheit flexibel an das jeweils zu trocknende Material angepasst werden.

Gemäß einer weiteren Ausgestaltung sind die Schachtwände zwischen Trocknungsschacht und Gasschächten perforierte Bleche. Gemäß einer bevorzugten Ausgestaltung sind die Löcher in den Blechen nach oben abgedeckt, so dass von oben durch den Trocknungsschacht hindurchtretende Material daran gehindert wird, durch die Löcher in den Wänden in einen Gasschacht auszutreten.

Gemäß einer bevorzugten Ausgestaltung ist mindestens eine der Schachtwände zwischen Trocknungsschacht und Gasschächten seitlich an vertikalen Führungseinrichtungen geführt und am oberen Ende mit einer Verlagerungseinrichtung verbunden, die ausgebildet ist, die Schachtwand innerhalb der Führungseinrichtungen vertikal nach oben und nach unten zu verlagern, um Materialbrücken zwischen den Schachtwänden des Trocknungsschachtes aufzubrechen. Hierdurch kann eine Blockierung des Trocknungsschachtes durch das zu trockene Material verhindert werden.

Gemäß einer weiteren Ausgestaltung sind beide Schachtwände am oberen Ende mit einer Verlagerungseinrichtung verbunden, wobei die Verlagerungseinrichtungen so synchronisiert sind, dass sie die beiden Schachtwände gegenläufig verlagern. Hierdurch werden besonders effektiv Materialbrücken zwischen den Schachtwänden des Trocknungsschachtes aufgebrochen.

Gemäß einer weiteren Ausgestaltung sind die Absperreinrichtungen Lamelleneinrichtungen mit jeweils mindestens einer um eine horizontale Achse schwenkbaren Lamelle. Durch Schwenken der Lamelle können unterschiedliche Durchlassquerschnitte freigegeben werden. Bevorzugt umfasst jede Absperreinrichtung mehrere parallele, um eine horizontale Achse schwenkbare Lamellen.

Gemäß einer weiteren Ausgestaltung sind beidseitig eines Trocknunsgas zuführenden Gasschachtes Trocknungsschächte angeordnet und an den Außenseiten jedes Trocknungsschachtes ist ein äußerer Gasschacht angeordnet. Hierdurch wird ein besonders kompakter Aufbau einer Trocknungseinheit mit einer hohen Wirksamkeit erreicht.

Gemäß einer weiteren Ausgestaltung, die sämtliche erfindungsgemäßen Anlagen betrifft, ist mindestens eine Komponente in mindestens einem Container angeordnet, wobei ein Container eine oder mehrere Komponenten der Anlage ganz oder teilweise aufnimmt. Diese Ausgestaltung ist besonders montagefreundlich und für einen mobilen Einsatz an verschiedenen Orten geeignet. Die Anlage ist bevorzugt so ausgebildet, dass die Komponenten ganz oder teilweise in mehreren Containern angeordnet sind, die zu zumindest einem wesentlichen Teil der Anlage zusammensetzbar sind.

Container im Sinne der vorliegenden Anmeldung sind vorzugsweise Rahmenkonstruktionen mit offenen Wänden oder mit einer oder mehreren geschlossenen Wänden. Die Rahmenkonstruktion hat vorzugsweise Pack- und Anschlussmaße und Eigenschaften wie Stapelbarkeit, Transportierbarkeit, Befestigung untereinander usw., entsprechend der ISO-Norm ISO 668:2013. Vorzugsweise haben die Container selbsttragende Rahmenkonstruktionen. Vorzugsweise ist die Rahmenkonstruktionen zugleich integraler Strukturteil von einer oder mehreren Komponenten der Anlage. Die Komponenten bzw. die darin enthaltenen Maschinen sind fest in die Rahmenkonstruktion integriert. Vorzugsweise weicht die Ausgestaltung der Container von der Ausgestaltung herkömmlicher Standardcontainer ab, z.B. hinsichtlich der Tragfähigkeit, Rahmenstärken, Anzahl und Art der Verstrebungen, usw. Grundsätzlich können im Rahmen der Erfindung aber auch herkömmliche Standardcontainer für die Aufnahme von Komponenten oder Teilen davon verwendet werden.

Gemäß einer weiteren Ausgestaltung ist die Gasvorbereitungseinheit und/oder die Trocknungseinheit ganz oder teilweise in einem vertikalen Container angeordnet. Im Hinblick auf die konstruktive Ausführung der Kühleinheit und der Gasvorbereitungseinheit ist diese Ausgestaltung besonders effektiv und platzsparend.

Gemäß einer bevorzugten Ausgestaltung ist mindestens ein Strukturelement einer Komponente der Anlage mindestens ein Strukturelement des Containers. Gemäß einer bevorzugten Ausgestaltung ist mindestens ein Strukturelement der Gasvorbereitungseinheit und/oder der Trocknungseinheit Bestandteil der Rahmenkonstruktion und/oder der Containerhülle. Bevorzugt ist mindestens ein Rahmenteil und/oder eine äußere Wand der Gasvorbereitungseinheit und/oder der Trocknungseinheit ein Strukturelement, welches zugleich zumindest teilweise Bestandteil der Containerhülle ist. Als Bestandteil der Containerhülle bildet das Strukturelement zugleich zumindest teilweise die äußere Hülle des Containers.

Die Erfindung wird nachfolgend anhand der anliegenden Zeichnungen von Ausführungsbeispielen näher erläutert. In den Zeichnungen zeigen:
- Fig. 1: eine Anlage zur Herstellung von Holzpellets in einer grobschematischen Darstellung;
- Fig. 2A: eine erste Variante einer Anlage zum Trocknen für die Anlage zur Herstellung von Holzpellets in einer schematischen Darstellung;
- Fig. 2B: eine zweite Variante einer Anlage zum Trocknen für die Anlage zum Herstellen von Holzpellets in einer schematischen Darstellung;
- Fig. 3A: Aufstellung der Komponenten der Anlage von Fig. 2A in der Draufsicht;
- Fig. 3B: Aufstellung der Komponenten der Anlage von Fig. 2B in der Draufsicht;
- Fig. 4: eine Gasvorbereitungseinheit derselben Anlage in einer Perspektivansicht schräg von der Seite;
- Fig. 5A+B: dieselbe Gasvorbereitungseinheit in einem Vertikalschnitt (Fig. 5A) und in einem Horizontalschnitt (Fig. 5B);
- Fig. 6: eine Trocknungseinheit derselben Anlage in einem perspektivischen Röntgenbild;
- Fig. 7: dieselbe Trocknungseinheit in einem Vertikalschnitt;
- Fig. 8A-B: dieselbe Trocknungseinheit mit verschiedenen Einstellungen der Absperreinrichtungen, jeweils in einem grobschematischen Vertikalschnitt.

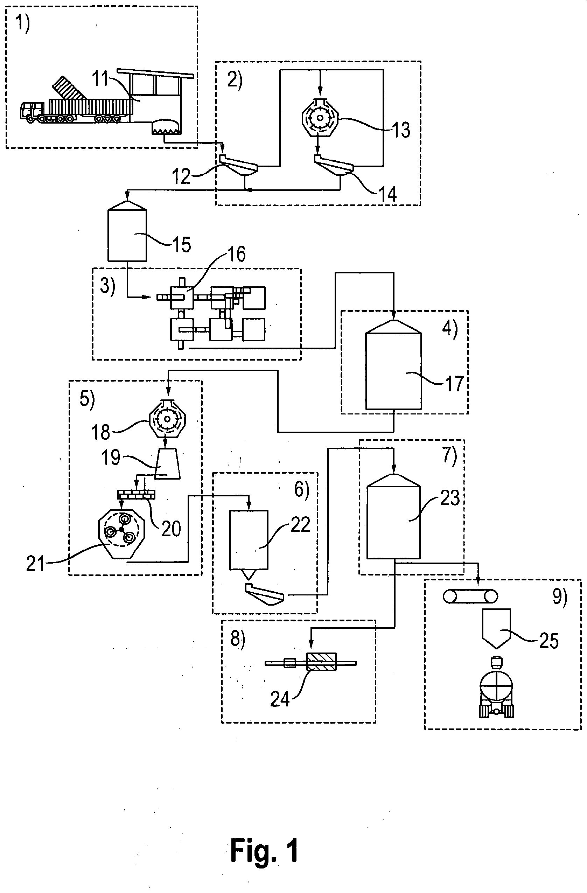

In Fig. 1 sind verschiedene Module einer Anlage zum Herstellen von Holzpellets durch gestrichelte Linien eingerahmt. Vorzugsweise bestehen die Module jeweils aus einem oder mehreren Containern, in denen die Komponenten der Anlage enthalten sind. Dies ist im Beispiel bei den Modulen 1, 2, 5, 6, 8 und 9 so ausgeführt. Das Modul 3 umfasst eine erfindungsgemäße Anlage zum Trocknen und die Module 4 und 7 sind im Beispiel Silos.

Rohstoff, wie z.B. Sägespan oder Holzhackschnitzel, wird mit einem LKW angeliefert und in der Rohstoffannahmeeinheit 11 entladen. Gegebenenfalls wird der Rohstoff nach Qualität bzw. Eigenschaften auf einem Platz sortiert gelagert und in geeigneten Mischungen der Anlage zugeführt, beispielsweise mittels eines Radlagers. In der Anlage wird der Rohstoff mittels des Siebs 12 fraktioniert. Grobfraktion wird in dem Nasszerkleinerer 13 zerkleinert. Nach der Zerkleinerung im Nasszerkleinerer 13 und nach dem Passieren eines Siebs 14 gelangt die Feinfraktion zusammen mit der Feinfraktion aus dem Sieb 12 in den Puffer- und Dosierbehälter 15.

Als nächstes erfolgt die Trocknung in der Anlage zum Trocknen 16 und anschließende Zwischenlagerung im Lagersilo 17. Im Anschluss erfolgt eine dosierte Förderung zu einer Trockenmühle 18, wo das Material auf die optimale Korngröße zerkleinert wird. Anschließend wird das Material in einem Konditionierer 19 für die Pressung vorbereitet. Nach dem Passieren einer Mischschnecke 20, in der ggf. Bindemittel zugeführt wird, gelangt der vorbereitete Rohstoff in eine Presse 21.

Nach dem Pressvorgang in der Presse 21 werden heiße Pellets in einem Kühler 22 gekühlt und zur Lagerung in ein Lagersilo 23 eingebracht. Nach der Lagerung im Lagersilo 23 werden die Pellets in einer Verpackungsanlage 24 in Kleingebinde verpackt oder direkt als Schüttgut in einer Verladeanlage 25 verladen.

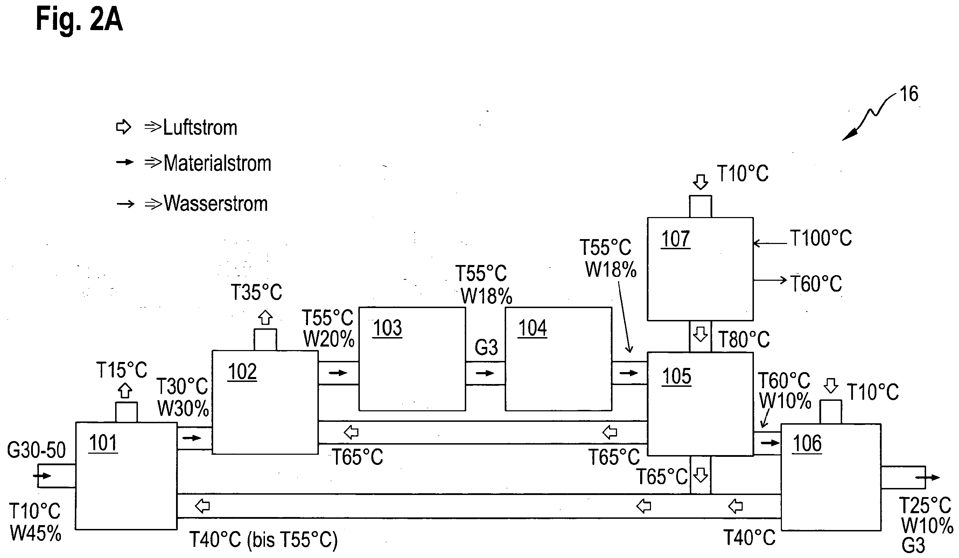

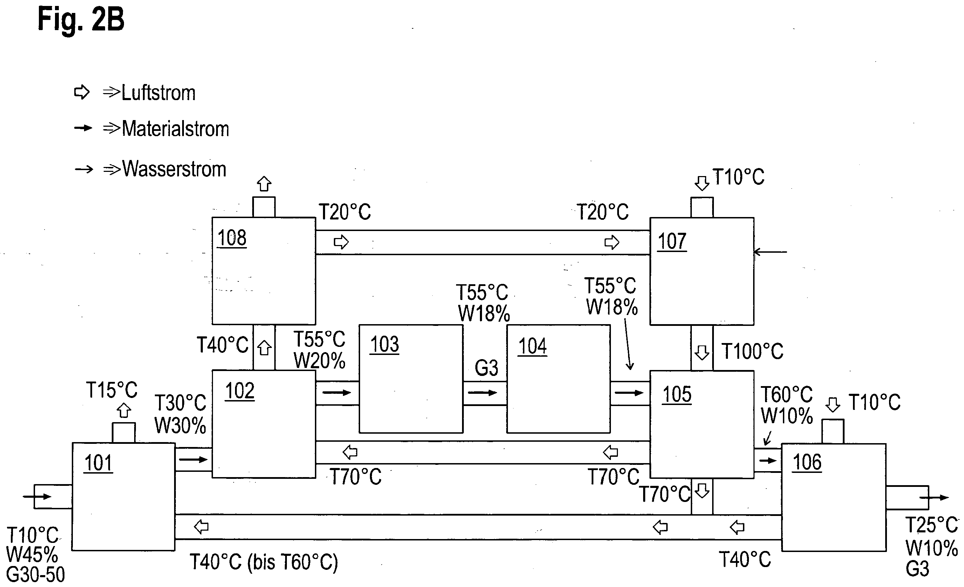

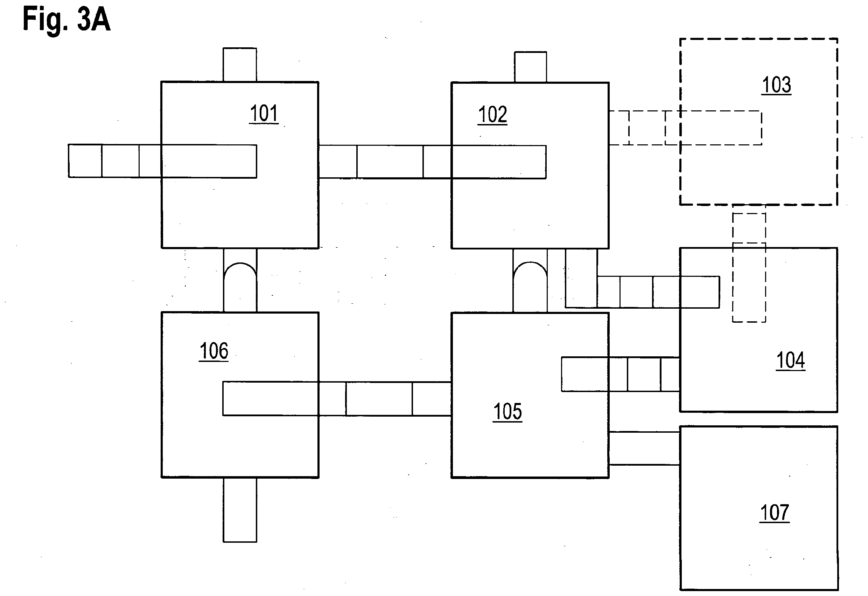

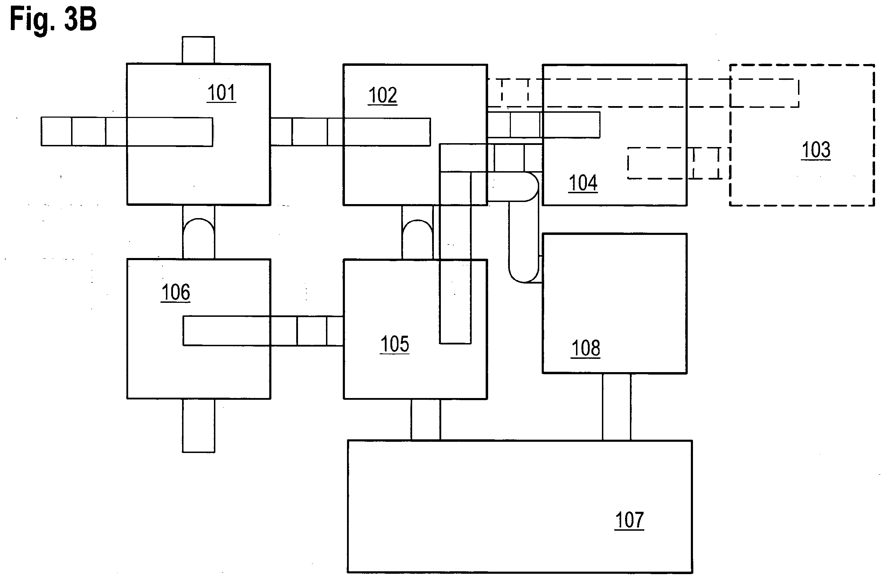

Die Erläuterung von zwei alternativen Anlagen zum Trocknen 16 erfolgt anhand der Fig. 2a, b und 3a, b. In Fig. 2a und b sind die Temperaturen des Trocknungsgases in Grad Celsius und die Feuchtigkeiten des Materials in Gewichtsprozent an verschiedenen Stellen der Anlage vermerkt. Bei beiden Alternativen wird der Anlage Umgebungsluft mit einer Temperatur von 10°C und 70% relativer Luftfeuchte zugeführt. Das zugeführte Material besteht aus Hackschnitzeln mit einem Wasseranteil von 45 Gew.-% und einer mittleren Teilchengröße im Bereich von 30 bis 50 mm.

Bei beiden Alternativen durchläuft das zu trocknende Material nacheinander eine erste Trocknungseinheit 101, eine zweite Trocknungseinheit 102, einen Zwischenzerkleinerer 103, einen Ruhebehälter 104, eine dritte Trocknungseinheit 105 und eine Kühleinheit 106.

Bei beiden Alternativen wird in einer Gasvorbereitungseinheit 107 Umgebungsluft erwärmt und als zweites vorgewärmtes Trocknungsgas der dritten Trocknungseinheit 105 zugeführt. Das durch Erwärmen des Materials in der dritten Trocknungseinheit 105 auf eine Temperatur oberhalb der Umgebungstemperatur abgekühlte zweite Trocknungsgas wird der zweiten Trocknungseinheit 102 zugeführt, um das dieser Trocknungseinheit aus der ersten Trocknungseinheit 101 zugeführte Material zu trocknen.

Die Kühleinheit 106 wird zum Kühlen des beim Trocknen in der dritten Trocknungseinheit 105 erwärmten Materials mit Umgebungsluft beschickt.

Die in der Kühleinheit 106 erwärmte Umgebungsluft wird der ersten Trocknungseinheit 101 als erstes Trocknungsgas zugeführt, um das dieser zugeführte Material vorzutrocknen.

Das in der ersten Trocknungseinheit 101 vorgetrocknete Material wird in der zweiten Trocknungseinheit 102 weitergetrocknet.

Nach der zweiten Trocknungseinheit 102 wird das Material in der Zerkleinerungseinheit 103 zerkleinert, um die Feuchtigkeit an der Oberfläche des Materials freizulegen. Anschließend wird es über eine bestimmte Ruhezeit von z.B. ein bis eineinhalb Stunden in dem Ruhebehälter 103 gelagert, damit sich die Flüssigkeit über den Querschnitt der Teilchen vergleichmäßigt.

Nach der Ruhezeit wird das Material in der dritten Trocknungseinheit 105 endgetrocknet. Schließlich wird es in der Kühleinheit 106 gekühlt.

Anschließend gelangt das getrocknete Material in das Lagersilo 17.

Das in der ersten Trocknungseinheit 101 abgekühlte erste Trocknungsgas wird in die Umgebung abgelassen. Bei der Alternativen von Fig. 2A wird das in der zweiten Trocknungseinheit 102 abgekühlte zweite Trocknungsgas in die Umgebung abgelassen. Bei der Alternativen von Fig. 2B wird das in der zweiten Trocknungseinheit 102 abgekühlte und angefeuchtete zweite Trocknungsgas einer Gastrocknungseinheit 108 zugeführt. In der Gastrocknungseinheit 108 wird beispielsweise durch Besprühen mit Wasser die Gastemperatur gesenkt und eine Dampfkondensation durchgeführt. Das kondensierte Wasser aus dem Sumpf der Gastrocknungseinheit 108 kann einer Wärmepumpe zugeführt werden, die die Wärmeenergie auf ein passendes Temperaturniveau für die Trocknungsgasvorbereitung bringt. Das in der Gastrocknungseinheit 108 getrocknete Trocknungsgas wird in der Gasvorbereitungseinheit 107 mit der Umgebungsluft gemischt.

Die Gasvorbereitungseinheit 107 der Alternativen von Fig. 2A arbeitet mit einem Wärmetauscher, der Heizmedium mit einer Temperatur von z.B. 100°C zugeführt wird, das den Wärmetauscher mit z.B. 60°C verlässt. Das zweite Trocknungsgas wird auf eine Temperatur von ca. 80°C erwärmt. Die Alternative von Fig. 2B weist einen Brenner auf. Der Brennstoff ist zum Beispiel getrocknete und feinzerkleinerte Biomasse (z.B. Holzstaub). Diese Ausführung ist besonders geeignet und bevorzugt für die Aufstellung und Standorte ohne oder mit unzureichenden externen Wärmequellen (KWK (Kraft-Wärme-Kopplung)-Anlagen, Prozessabwärme usw.).

Ein weiterer Vorteil der Gasaufbereitungseinheit 107 mit Brenner liegt in der Verbesserung der Betriebssicherheit, da die Nutzung des sauerstoffarmen Abgases aus der Gasvorbereitungseinheit 107 quasi im Umlaufbetrieb einen Brandschutz bewirkt. Zugeführt wird nur die Luftmenge, die für die vollständige Verbrennung des Brennstoffes notwendig ist, sodass das heiße Brenngas (z.B. ca. 600°C bis 800°C) mit dem getrockneten Trocknungsgas aus der Gastrocknungseinheit 108 zu einem zweiten Trocknungsgas mit der gewünschten Trocknungsgastemperatur (ca. 100°C) gemischt und der dritten Trocknungsstufe 105 zugeführt wird. Die Erwärmung des Trocknungsgases auf eine Temperatur von max. 120°C, bevorzugt maximal 100°C, vermindert oder reduziert zumindest die Verflüchtigung von energiereichen und für die Herstellung der Holzpellets wichtigen Bestandteilen des Materials, wie z.B. Lignin. Zudem senkt die niedrige Trocknungstemperatur das Brandrisiko.

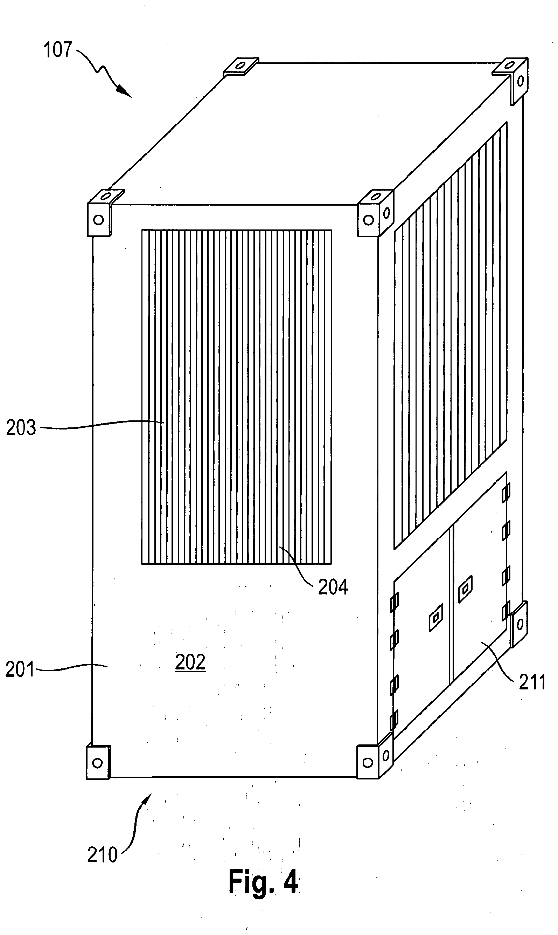

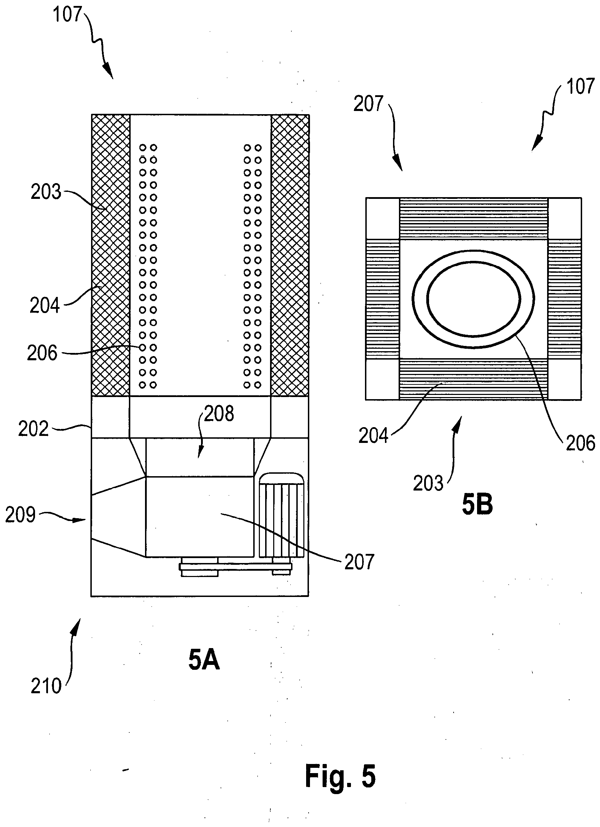

Aufbau und Funktionsweise eines Ausführungsbeispiels der Gasvorbereitungseinheit 107 wird anhand von Fig. 4 und 5 erläutert.

Die Gasvorbereitungseinheit 107 hat ein quaderförmiges Gehäuse 201 mit in vier vertikalen Seitenwänden 202 in einem Abstand vom unteren Ende angeordneten, jeweils in horizontaler Richtung gasdurchlässigen Wärmetauschern 203. Jeder Wärmetauscher 203 umfasst ein plattenförmiges Register 204, das in der Öffnung 205 einer Seitenwand 202 angeordnet ist. Ferner umfassen die Wärmetauscher 203 ein Rohrbündel 206, das als spiralförmig gewickelte Rohrschlange mit vertikaler Wickelachse ausgebildet ist.

Unterhalb der Wärmetauscher 203 ist im Gehäuse 201 ein Gebläse 207 mit vertikalem Lufteintritt 208 und radialem Luftaustritt 209 durch eine Seitenwand des Gehäuses angeordnet.

Die Gasvorbereitungseinheit 107 ist als Container 210 ausgebildet, d.h. sie weist die Abmessungen eines Standardcontainers auf. Die Seitenwände 202 sind integraler Bestandteil der Containerhülle. In einer der Seitenwände sind unten Revisionsklappen 211 vorhanden.

Der Container 210 kann in horizontaler Ausrichtung transportiert werden. Im Betrieb hat er die in Fig. 4 gezeigte vertikale Ausrichtung.

Das Gebläse 207 saugt die zu erwärmende Umgebungsluft durch die Register 204 und das Rohrbündel 206 hindurch an. Beim Durchgang durch die Register 204 wird die Umgebungsluft vorgewärmt und beim Durchgang durch das Rohrbündel 206 nacherhitzt. Aus der Gasvorbereitungseinheit 107 gelangt das vorgewärmte Trocknungsgas z.B. in die dritte Trocknungseinheit.

Das Rohrbündel 206 ist bevorzugt als Rippenrohrbündel ausgeführt und dient als zweite Aufwärmstufe. Heißwasser oder andere geeignete Flüssigkeit/Mischung werden zuerst durch das Rohrbündel 206 hindurchgeführt und anschließend durch die Register 204. Nach dem Durchlaufen der Register 204 wird das abgekühlte Medium als Rücklauf an die externe Wärmequelle zurückgeleitet.

Die Register 204 sind bevorzugt Lamellenheizregister. Das Gebläse 207 ist z.B. ein Radialventilator oder ein Seitenkanalverdichter.

Die Gasvorbereitungseinheit 107 hat eine besonders gute Grundflächenausnutzung und eine verbesserte Ausnutzung der zugeführten Heizwärme. Zudem wird durch die Anordnung der Wärmetauscher 203 im oberen Bereich die Belastung der Gasvorbereitungseinheit 107 mit Bodenstaub durch Aufwirbelungen reduziert. Dies erhöht die Effizienz der Wärmetauscher 203 und verlängert die Reinigungsintervalle.

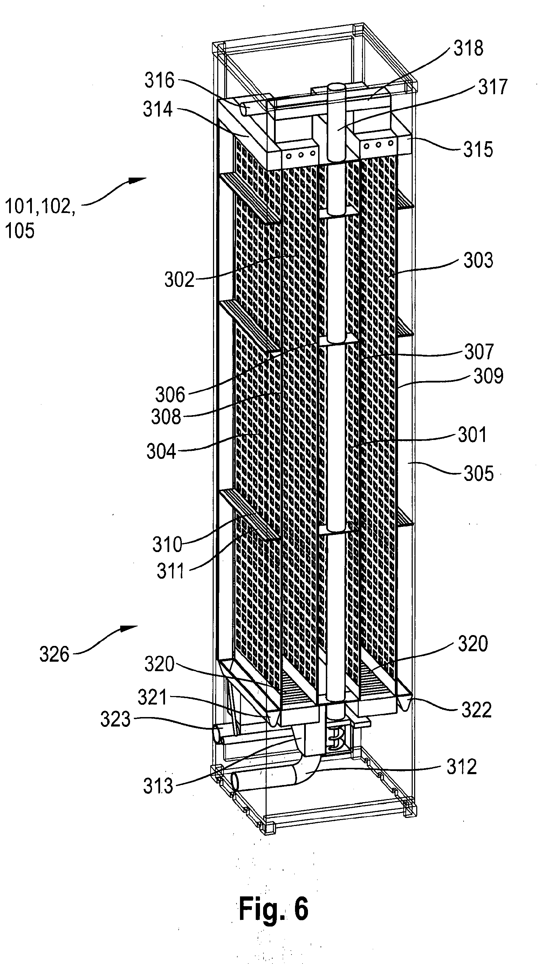

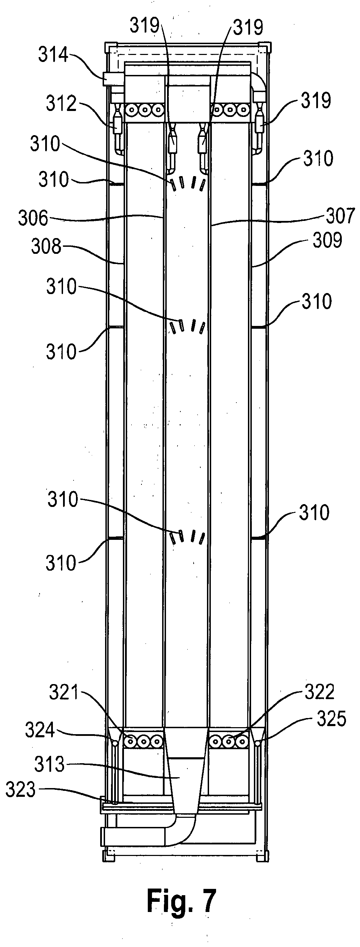

Anhand der Fig. 6 bis 8 werden Aufbau und Funktion einer der als Schachttrockner ausgebildeten Trocknungseinheiten 101, 102, 105 erläutert.

Der Schachttrockner 101, 102, 105 weist einen zentralen vertikalen Gasschacht 301 und Trocknungsschächte 302, 303 auf beiden Seiten des Gasschachtes auf. Auf den beiden Außenseiten der Trocknungsschächte 302, 303 hat der Schachttrockner äußere Gasschächte 304, 305.

Die Gasschächte 301, 304, 305 und Trocknungsschächte 301, 303 sind voneinander durch perforierte Schachtwände 306, 307, 308, 309 getrennt, die vorzugsweise als Lochbleche ausgebildet sind.

Die Trocknungsschächte 302, 303 und Gasschächte 301, 304, 305 habenjeweils einen im Wesentlichen rechteckigen Querschnitt.

Innerhalb der Gasschächte 301, 304, 305 sind Absperreinrichtungen 310 mit einstellbarem Durchlassquerschnitt angeordnet, die als Lamelleneinrichtungen mit jeweils mindestens einer um eine horizontale Achse stufenlos schwenkbaren Lamelle 311 ausgebildet sind. Im Beispiel sind es drei Lamellen 311 pro Absperreinrichtung 310.

Im Beispiel sind die Absperreinrichtungen 310 in vertikaler Richtung an drei annähernd gleichmäßig über die Höhe des Schachttrockners verteilten Positionen angeordnet.

Trocknungsgas wird dem zentralen Gasschacht unten über eine Eingangsleitung 312 und einen Verteiltrichter 313 zugeführt. Am oberen Ende der äußeren Gasschächte 304, 305 sind Sammelleitungen 314, 315 vorhanden, durch die das angefeuchtete und abgekühlte Trocknungsgas in eine Austragsleitung 316 gelangen.

Das zu trocknende Material wird über eine Befülleinrichtung zugeführt, die beispielsweise als vertikale Schnecke 317 ausgebildet ist. In der Nähe des unteren Endes erfasst die Schnecke 317 zugeführtes Material und transportiert es bis nahe dem oberen Ende des Schachttrockners 101, 102, 105. Dort wird das Material Verteileinrichtungen 318 zugeführt, die es den oberen Enden der beiden Trocknungsschächte 302, 303 zuführen.

Die Schachtwände 306, 307, 308, 309 der Trocknungsschächte 302, 303 sind an ihren senkrechten Rändern an vertikalen Führungseinrichtungen geführt. Oben ist jede Schachtwand 306, 307, 308, 309 mit einer Verlagerungseinrichtung 319 verbunden, welche ausgebildet ist, die Schachtwand vertikal anzuheben und abzusenken, beispielsweise über eine Strecke von einigen Zentimetern (z.B. 5 bis 10 cm). Die Verlagerungseinrichtungen sind so synchronisiert, dass sie die Wände, die denselben Trocknungsschacht 302, 303 begrenzen, gegenläufig verlagern. Jede Verlagerungseinrichtung 319 ist z.B. eine hydraulische Verlagerungseinrichtung, insbesondere ein Hydraulikzylinder. Vorzugsweise ist jede Verlagerungseinrichtung 319 in einem Gasschacht 301, 304, 305 angeordnet.

Am unteren Ende jedes Trocknungsschachtes 302, 303 ist ein Schlitzboden 320 vorhanden, durch den getrocknetes Material geregelt abgelassen werden kann. Mittels eines Schneckenbodens 321, 322 wird das abgelassene Material in eine Sammel- und Austragsschnecke 323 geführt.

Die Nachfüllung der Trocknungsschächte 302, 303 wird so geregelt, dass die Trocknungsschächte vollständig mit dem zu trocknenden Material gefüllt sind, und keine Falschluft entsteht.

Die Schachtwände 306, 307, 308, 309 sind so perforiert, dass Material nicht seitlich hindurchtreten und in einen Gasschacht 301, 304, 305 fallen kann.

Das Trocknungsgas gelangt durch die Eingangsleitung 312 und den Verteiltrichter 313 in den zentralen Gasschacht 301 und strömt quer durch die perforierten Schachtwände 306, 307, 308, 309 durch die Trocknungsschächte 302, 303. Durch die äußeren Gasschächte 304, 305 gelangt das Trocknungsgas in die Sammelleitungen 314, 315 und wird anschließend durch die Austragsleitung 316 abgezogen.

Die Führung und Mengenverteilung des Trocknungsgases in den Trocknungsschächten 302, 303 erfolgt mittels der Absperreinrichtungen 310. Diese können mehr oder weniger geöffnet werden. Hierdurch ist es möglich, abhängig von den Materialeigenschaften (Partikelgröße, Schüttdichte usw.) und des Durchsatzes (kg pro Stunde) des zu trocknenden Materials die Führung des Trocknungsgases über die verschiedenen Höhenabschnitte der Trocknungsschächte 302, 303 einzustellen.

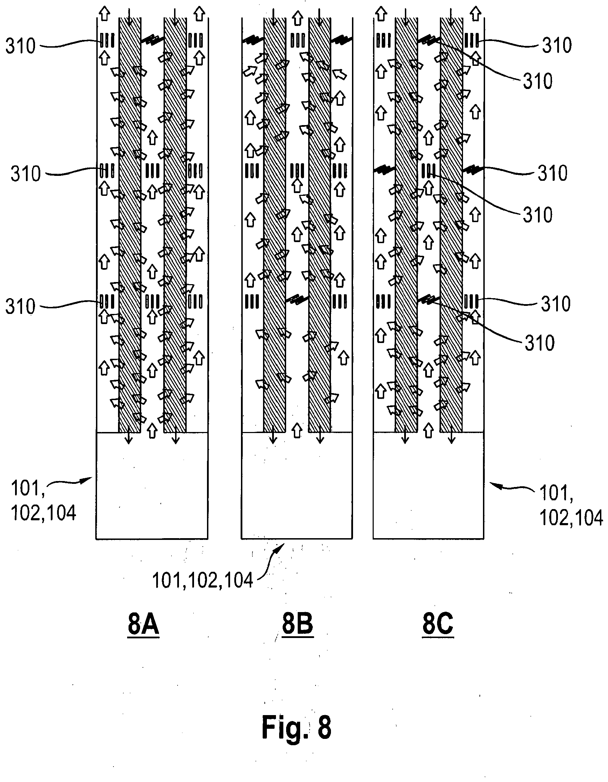

Bei feinkörnigen Rohrstoffen mit großer Oberfläche und großem Luftwiderstand kann eine einfache Querung des Trocknungsschachtes 302, 303 vorteilhaft sein, wie in Fig. 8A gezeigt. Bei grobkörnigen Rohrstoffen mit entsprechend geringerem Luftwiderstand kann eine ein- oder mehrfache Querung vorteilhaft sein, wie in Fig. 8B und C gezeigt. Feinpartikel, welche unbeabsichtigt in die Gasschächte 304, 305 gelangen, können mittels Schnecken 324, 325 ausgetragen werden, die sich am unteren Ende der äußeren Trocknungsschächte 304, 305 befinden.

Ferner ist die Führung des Trocknungsgases gemäß Fig. 8B und C bei Teillastbetrieb oder bei der Anlagenausführung für geringere Stundenleistungen vorteilhaft. Dabei ist es möglich, die Anlage nur mit zwei anstatt mit drei Trockenstufen auszuführen.

In einer anderen Ausführung ist es möglich, durch Ausführen des Schachttrockners 101, 102, 105 mit weiteren Trocknungsschächten und Gasschächten Material auf deutlich niedrigere Wassergehalte von z.B. vier Gew.-% oder 2 Gew.-% zu trocknen.

Vorzugsweise ist der Schachttrockner 101, 102, 105 in einem einzigen Container 326 ausgebildet. Die äußeren Wände der Schächte 301 bis 305 bilden dabei zugleich Teile der Hülle des Containers 326. Der Container 326 ist horizontal transportierbar und ist im Betrieb vertikal aufgerichtet, wie in den Figuren 6 bis 8 gezeigt.

## Patentansprüche

1. Verfahren zum Trocknen von Holzspänen, Holzhackschnitzeln oder anderen festen, kleinstückigen Materialien organischen und/oder mineralischen Ursprungs, bei dem
- in einem ersten Trocknungsschritt das Material mittels eines ersten vorgewärmten Trocknungsgases vorgetrocknet wird,
- in einem zweiten Trocknungsschritt das getrocknete Material aus dem ersten Trocknungsschritt mittels eines zweiten Trocknungsgases getrocknet wird,
- in einem dritten Trocknungsschritt das getrocknete Material aus dem zweiten Trocknungsschritt getrocknet wird,
- das getrocknete Material aus dem dritten Trocknungsschritt mittels eines Kühlgases gekühlt wird,
- Umgebungsluft erwärmt und als zweites vorgewärmtes Trocknungsgas dem dritten Trocknungsschritt zugeführt wird,
- das im dritten Trocknungsschritt auf eine oberhalb der Temperatur der Umgebungsluft abgekühlte zweite Trocknungsgas dem zweiten Trocknungsschritt als zweites Trocknungsgas zugeführt wird,
- das durch Kühlen des Materials erwärmte Kühlgas und/oder das im dritten Trocknungsschritt abgekühlte zweite Trocknungsgas als erstes vorgewärmtes Trocknungsgas dem ersten Trocknungsschritt zugeführt wird.

2. Verfahren nach Anspruch 1, bei dem das getrocknete Material aus dem ersten oder dem zweiten Trocknungsschritt eine Ruhezeit durchläuft, in der der Wassergehalt innerhalb der Teilchen des Materials mehr oder weniger vergleichmäßigt wird, und das Material nach dem Durchlaufen der Ruhezeit in dem zweiten oder dritten Trocknungsschritt getrocknet wird.

3. Verfahren nach Anspruch 1 oder 2, bei dem das getrocknete Material aus dem ersten Trocknungsschritt oder aus dem zweiten Trocknungsschritt zerkleinert und danach dem zweiten Trocknungsschritt oder dem dritten Trocknungsschritt zugeführt wird.

4. Verfahren nach einem der Ansprüche 1 bis 3, bei dem das abgekühlte und angefeuchtete Trocknungsgas aus dem zweiten Trocknungsschritt getrocknet und das getrocknete Trocknungsgas mit der Umgebungsluft gemischt und als zweites Trocknungsgas dem zweiten oder dritten Trocknungsschritt zugeführt wird.

5. Verfahren nach einem der Ansprüche 1 bis 4, bei dem ein Teil des abgekühlten zweiten Trocknungsgases aus dem dritten Trocknungsschritt mit dem erwärmten Kühlgas gemischt und als erstes Trocknungsgas dem ersten Trocknungsschritt zugeführt wird.

6. Verfahren nach einem der Ansprüche 1 bis 5, bei dem die Umgebungsluft und/oder das getrocknete Trocknungsgas mittels Wärmetauscher und/oder mittels eines Heizbrenners erhitzt wird.

7. Verfahren nach einem der Ansprüche 1 bis 6, bei dem der erste und/oder der zweite und/oder der dritte Trocknungsschritt in der Weise durchgeführt werden, dass das Material eine vertikale Trocknungsstrecke von oben nach unten durchläuft und das Trocknungsgas im Kreuzgegenstrom durch die Trocknungsstrecke hindurchgeführt wird, wobei die Trocknungsstrecke in einzelne Abschnitte unterteilt ist, in denen der Massenstrom des Trocknungsgases, der in einem Abschnitt der Trocknungsstrecke quer durch diese hindurchgeführt wird, einstellbar ist.

8. Verfahren nach einem der Ansprüche 1 bis 7, bei dem die Umgebungsluft erwärmt wird, indem sie von einem Gebläse in im wesentlichen horizontaler Richtung durch eine kastenförmige, vertikale Anordnung von vier Wärmetauschern gesaugt und beim Durchtreten durch die Wärmetauscher erwärmt und anschließend in vertikaler Richtung von dem unterhalb der Wärmetauscher angeordneten Gebläse angesaugt und von diesem dem zweiten oder dritten Trocknungsschritt zugeführt wird.

9. Anlage zum Trocknen von Holzspänen, Holzhackschnitzeln oder anderen festen, kleinstückigen Materialien organischen und/oder mineralischen Ursprungs geeignet zur Durchführung des Verfahren gemäß einem der Ansprüche 1 bis 8, umfassend:
- eine erste Trocknungseinheit (101), die ausgebildet ist, in einem ersten Trocknungsschritt das Material mittels eines ersten vorgewärmten Trocknungsgases vorzutrocknen,
- eine zweite Trocknungseinheit (102), die ausgebildet ist, in einem zweiten Trocknungsschritt das getrocknete Material aus der ersten Trocknungseinheit (101) mittels eines zweiten Trocknungsgases zu trocknen,
- eine dritte Trocknungseinheit (105) aufweist, die ausgebildet ist, in einem dritten Trocknungsschritt das getrocknete Material aus der zweiten Trocknungseinheit (102) mittels des zweiten vorgewärmten Trocknungsgases zu trocknen und das auf eine Temperatur oberhalb der Umgebungstemperatur abgekühlte zweite Trocknungsgas der zweiten Trocknungseinheit (102) zuzuführen,
- eine Gasvorbereitungseinheit (107), die ausgebildet ist, Umgebungsluft zu erwärmen und als zweites vorgewärmtes Trocknungsgas für die dritte Trocknungseinheit (105) bereitzustellen,
- eine Kühleinheit (106), die ausgebildet ist, das getrocknete Material aus der dritten Trocknungseinheit (105) mittels eines Kühlgases zu kühlen, und
- Leitungen, die das in der Kühleinheit (106) erwärmte Kühlgas und/oder das in der dritten Trocknungseinheit (105) auf eine Temperatur oberhalb der Umgebungstemperatur abgekühlte zweite Trocknungsgas als erstes vorgewärmtes Trocknungsgas der ersten Trocknungseinheit (101) zuzuführen.

10. Anlage gemäß Anspruch 9, die einen Ruhebehälter (104) umfasst, der so ausgebildet ist, dass in dem Ruhebehälter (104) das getrocknete Material aus dem ersten Trocknungsschritt oder aus dem zweiten Trocknungsschritt eine Ruhezeit durchläuft, in der sich der Wassergehalt innerhalb der Teilchen des Materials mehr oder weniger vergleichmäßigt, wobei das Material nach dem Durchlaufen der Ruhezeit für die weitere Trocknung im zweiten Trocknungsschritt oder im dritten Trocknungsschritt bereitgestellt wird.

11. Anlage nach Anspruch 9 oder 10, die eine Zerkleinerungseinrichtung (103) umfasst, die ausgebildet ist, das getrocknete Material aus der ersten Trocknungseinheit (101) oder aus der zweiten Trocknungseinheit (102) zu zerkleinern und für die Trocknung in der zweiten Trocknungseinheit (102) oder in der dritten Trocknungseinheit (105) bereitzustellen.

12. Anlage gemäß einem der Ansprüche 9 bis 11, die eine Gastrocknungseinheit (108) umfasst, die ausgebildet ist, das abgekühlte und angefeuchtete Trocknungsgas aus der zweiten Trocknungseinheit (102) zu trocknen und der Gasvorbereitungseinheit (107) für eine Mischung mit der Umgebungsluft bereitzustellen.

13. Anlage gemäß einem der Ansprüche 9 bis 12, bei der die dritte Trocknungseinheit (105) über eine Leitung mit der Leitung zwischen der Kühleinheit (106) und der ersten Trocknungseinheit (101) verbunden ist, um abgekühlte, zweite Trocknungsluft aus der dritten Trocknungseinheit mit der erwärmten Luft aus der Kühleinheit (106) zu mischen und als erste Trocknungsluft der ersten Trocknungseinheit (101) zuzuführen.

14. Anlage zum Trocknen von Holzspänen, Holzhackschnitzeln oder anderen festen, kleinstückigen Materialien organischen und/oder mineralischen Ursprunges gemäß einem der Ansprüche 9 bis 13, wobei die Gasvorbereitungseinheit (107) zum Erzeugen eines erwärmten Trocknungsgases ein quaderförmiges Gehäuse (201) mit in vier vertikalen Seitenwänden (202) in einem Abstand vom unteren Ende angeordneten, jeweils in horizontaler Richtung gasdurchlässigen Wärmetauschern (203), ein unterhalb der Wärmetauscher (203) im Gehäuse (201) angeordnetes Gebläse (207) mit einem Lufteintritt (208) an der Oberseite und einem Luftaustritt (209), der über eine Leitung mit einer Trocknungseinheit verbunden ist, umfasst.

15. Anlage zum Trocknen von Holzspänen, Holzhackschnitzeln oder anderen festen, kleinstückigen Materialien gemäß einem der Ansprüche 9 bis 14, wobei eine Trocknungseinheit (101, 102, 105) mindestens einem vertikalen Trocknungsschacht ( 302, 303) und vertikalen Gasschächten (301, 304, 305) auf beiden Seiten des Trocknungsschachtes (302,303) aufweist, wobei die Schachtwände (306 bis 309) zwischen dem Trocknungsschacht (302, 303) und den Gasschächten (301, 304, 305) perforiert sind, der Trocknungsschacht (302, 303) oben einen Einlass für zu trocknendes Material und unten einen Auslass für getrocknetes Material aufweist, mindestens einer der Gasschächte (301, 304, 305) am unteren Ende einen Gaseinlass und mindestens einer der Gasschächte am oberen Ende einen Gasauslass aufweist, und innerhalb der Gasschächte (301, 304, 305) horizontale Absperreinrichtungen (310) mit einstellbarem Durchlassquerschnitt angeordnet sind.

16. Anlage gemäß Anspruch 15, bei der mindestens eine der Schachtwände (306 bis 309) zwischen Trocknungsschacht (302, 303) und Gasschächten (301, 304, 305) seitlich an vertikalen Führungseinrichtungen geführt und am oberen Ende mit einer Verlagerungseinrichtung verbunden ist, die ausgebildet ist, die Schachtwand (306 bis 309) innerhalb der Führungseinrichtungen vertikal nach oben und nach unten zu verlagern, wobei vorzugsweise beide Schachtwände (306 bis 309) am oberen Ende mit einer Verlagerungseinrichtung verbunden sind, wobei die Verlagerungseinrichtungen so synchronisiert sind, dass sie die beiden Schachtwände (306 bis 309) gegenläufig verlagern.

17. Anlage nach Anspruch 16, bei der die Absperreinrichtungen (310) Lamelleneinrichtungen mit jeweils mindestens einer um eine horizontale Achse schwenkbaren Lamelle (311) sind.

18. Anlage nach einem der Ansprüche 9 bis 17, bei der mindestens eine Komponente in mindestens einem Container (210, 326) angeordnet ist, wobei ein Container eine oder mehrere Komponenten der Anlage ganz oder teilweise aufnimmt, und/oder bei der die Gasvorbereitungseinheit (107) und/oder die Trocknungseinheit (101, 102, 105) in einem vertikalen Container (210, 326) angeordnet sind und/oder bei der mindestens ein Strukturelement der Gasvorbereitungseinheit und/oder der Trocknungseinheit zugleich ein Strukturelement des Containers (210, 326) ist.

## Claims

1. A process for dying wood shavings, woodchips or other solid, particulate materials of organic and/or mineral origin, in which:
- in a first drying step, the material is pre-dried by means of a first preheated drying gas,
- in a second drying step, the dried material from the first drying step is dried by means of a second drying gas,
- in a third drying step, the dried material from the second drying step is dried,
- the dried material from the third drying step is cooled by means of a cooling gas,
- ambient air is heated and supplied to the third drying step as the second preheated drying gas,
- the second drying gas cooled in the third drying step to a temperature above the temperature of the ambient air is supplied to the second drying step as the second drying gas,
- the cooling gas heated by cooling the material and/or the second drying gas cooled in the third drying step is/are supplied to the first drying step as the first drying gas.

2. The process according to Claim 1, in which the dried material from the first or the second drying step undergoes a rest period, in which the water content within the particles of the material is more or less equalized, and the material is dried in the second or third drying step after the rest period is complete.

3. The process according to Claim 1 or 2, in which the dried material from the first drying step or from the second drying step is macerated and then supplied to the second drying step or the third drying step.

4. The process according to one of Claims 1 to 3, in which the cooled and humidified drying gas from the second drying step is dried and the dried drying gas is mixed with the ambient air and is supplied to the second or third drying step as the second drying gas.

5. The process according to one of Claims 1 to 4, in which a part of the cooled, second drying gas from the third drying step is mixed with the heated cooling gas and is supplied to the first drying step as the first drying gas.

6. The process according to one of Claims 1 to 5, in which the ambient air and/or the dried drying gas is/are heated by means of heat exchangers and/or by means of a heat burner.

7. The process according to one of Claims 1 to 6, in which the first and/or the second and/or the third drying step is/are performed in a manner such that the material passes through a vertical drying path from top to bottom and the drying gas is guided through the drying path in the cross-counterflow, wherein the drying path is subdivided into individual sections, in which the mass flow of the drying gas, which is guided transversely though the drying path in a section thereof, can be adjusted.

8. The process according to one of Claims 1 to 7, in which the ambient air is heated in that it is suctioned by a fan in a substantially horizontal direction through a boxshaped, vertical arrangement of four heat exchangers and is heated while passing through the heat exchangers and is subsequently suctioned up in the vertical direction by the fan arranged below the heat exchangers and is supplied by said fan to the second or third drying step.

9. An apparatus for drying wood shavings, woodchips or other solid, particulate materials of organic and/or mineral origin, which is suitable for performing the process according to one of Claims 1 to 8, comprising:
- a first drying unit (101) which is configured to pre-dry the material in a first drying step by means of a first preheated drying gas,
- a second drying unit (102) which is configured to dry the dried material from the first drying unit (101) by means of a second drying gas in a second drying step,
- a third drying unit (105) which is configured to dry the dried material from the second drying unit (102) by means of the second preheated drying gas in a third drying step, and to supply the second drying gas cooled to a temperature above the ambient temperature to the second drying unit (102),
- a gas preparation unit (107) which is configured to heat ambient air and to make it available as the second preheated drying gas for the third drying unit (105),
- a cooling unit (106) which is configured to cool the dried material from the third drying unit (105) by means of a cooling gas, and
- lines which supply the cooling gas heated in the cooling unit (106) and/or the second drying gas cooled in the third drying unit (105) to a temperature above the ambient temperature to the first drying unit (101) as the first preheated drying gas.

10. The apparatus according to Claim 9, which comprises a resting container (104) which is configured so that the dried material from the first drying step or from the second drying step undergoes a rest period in the resting container (104), in which the water content within the particles of the material is more or less equalized, wherein the material is made available for further drying in the second drying step or in the third drying step after undergoing the rest period.

11. The apparatus according to Claim 9 or 10, which comprises a maceration apparatus (103) which is configured to macerate the dried material from the first drying unit (101) or from the second drying unit (102) and to make it available for drying in the second drying unit (102) or in the third drying unit (105).

12. The apparatus according to one of Claims 9 to 11, which comprises a gas drying unit (108) which is configured to dry the cooled and humidified drying gas from the second drying unit (102) and to make it available to the gas preparation unit (107) for mixing with the ambient air.

13. The apparatus according to one of Claims 9 to 12, in which the third drying unit (105) is connected to the line between the cooling unit (106) and the first drying unit (101) via a line, in order to mix cooled, second drying air from the third drying unit with the heated air from the cooling unit (106) and to supply it to the first drying unit (101) as the first drying air.

14. The apparatus for drying wood shavings, woodchips or other solid, particulate materials of organic and/or mineral origin according to one of Claims 9 to 13, wherein the gas preparation unit (107) for generating a heated drying gas comprises a cuboidal housing (201) having heat exchangers (203) arranged at a distance from the bottom end in four vertical side walls (202) which are, in each case, gas-permeable in the horizontal direction, a fan (207) arranged in the housing (201) below the heat exchangers (203) with an air inlet (208) on the top side and an air outlet (209) which is connected to a drying unit via a line.

15. The apparatus for drying wood shavings, woodchips or other solid, particulate materials according to one of Claims 9 to 14, wherein a drying unit (101, 102, 105) has at least one vertical drying duct (302, 303) and vertical gas ducts (301, 304, 305) on both sides of the drying duct (302, 303), wherein the duct walls (306 to 309) between the drying duct (302, 303) and the gas ducts (301, 304, 305) are perforated, the drying duct (302, 303) has an inlet at the top for the material to be dried and an outlet at the bottom for dried material, at least one of the gas ducts (301, 304, 305) at the bottom end has a gas inlet and at least one of the gas ducts at the top end has a gas outlet and horizontal shut-off apparatuses (310) with an adjustable passage cross-section are arranged within the gas ducts (301, 304, 305).

16. The apparatus according to Claim 15, in which at least one of the duct walls (306 to 309) between the drying duct (302, 303) and gas ducts (301, 304, 305) is guided laterally on vertical guiding apparatuses and is connected at the upper end to a displacement apparatus which is configured to displace the duct wall (306 to 309) vertically upwards and downwards within the guiding apparatuses, wherein both duct walls (306 to 309) at the upper end are preferably connected to a displacement apparatus, wherein the displacement apparatuses are synchronized so that they displace the two duct walls (306 to 309) in the opposite direction.

17. The apparatus according to Claim 16, in which the shut-off apparatuses (310) are lamella apparatuses each having at least one lamella (311) which can be pivoted about a horizontal axis.

18. The apparatus according to one of Claims 9 to 17, in which at least one component is arranged in at least one container (210, 326), wherein a container receives one or more components of the apparatus entirely or partially, and/or in which the gas preparation unit (107) and/or the drying unit (101, 102, 105) is/are arranged in a vertical container (210, 326) and/or in which the at least one structural element of the gas preparation unit and/or the drying unit is/are simultaneously a structural element of the container (210, 326).

## Revendications

1. Procédé de séchage de copeaux de bois, de déchets de bois hachés ou d'autres matériaux solides en forme de particules d'origine organique et/ou minérale, dans lequel
- dans une première étape de séchage, le matériau est préséché au moyen d'un premier gaz de séchage préchauffé,
- dans une deuxième étape de séchage, le matériau séché issu de la première étape de séchage est séché au moyen d'un deuxième gaz de séchage,
- dans une troisième étape de séchage, le matériau séché issu de la deuxième étape de séchage est séché,
- le matériau séché issu de la troisième étape de séchage est refroidi au moyen d'un gaz de refroidissement,
- de l'air ambiant est chauffé et acheminé vers la troisième étape de séchage en tant que deuxième gaz de séchage préchauffé,
- le deuxième gaz de séchage refroidi à une température supérieure à la température de l'air ambiant dans la troisième étape de séchage est acheminé vers la deuxième étape de séchage en tant que deuxième gaz de séchage,
- le gaz de refroidissement chauffé par le refroidissement du matériau et/ou le deuxième gaz de séchage refroidi dans la troisième étape de séchage est/sont acheminé(s) vers la première étape de séchage en tant que premier gaz de séchage préchauffé.

2. Procédé selon la revendication 1, dans lequel le matériau séché issu de la première ou de la deuxième étape de séchage est soumis à un temps de repos, pendant lequel la teneur en eau à l'intérieur des fragments de matériau est plus ou moins égalisée, et le matériau est séché dans la deuxième ou la troisième étape de séchage après avoir été soumis au temps de repos.

3. Procédé selon la revendication 1 ou 2, dans lequel le matériau séché issu de la première étape de séchage ou de la deuxième étape de séchage est broyé et ensuite acheminé vers la deuxième étape de séchage ou vers la troisième étape de séchage.

4. Procédé selon l'une des revendications 1 à 3, dans lequel le gaz de séchage refroidi et humidifié issu de la deuxième étape de séchage est séché et le gaz de séchage séché est mélangé à l'air ambiant et acheminé vers la deuxième ou la troisième étape de séchage en tant que deuxième gaz de séchage.

5. Procédé selon l'une des revendications 1 à 4, dans lequel une partie du deuxième gaz de séchage issu de la troisième étape de séchage est mélangé au gaz de refroidissement chauffé et acheminé vers la première étape de séchage en tant que premier gaz de séchage.

6. Procédé selon l'une des revendications 1 à 5, dans lequel l'air ambiant et/ou le gaz de séchage séché est chauffé au moyen d'échangeurs de chaleur et/ou au moyen d'un brûleur de chauffage.

7. Procédé selon l'une des revendications 1 à 6, dans lequel la première et/ou la deuxième et/ou la troisième étape de séchage sont exécutées de telle façon que le matériau parcourt un trajet de séchage vertical de haut en bas et le gaz de séchage est guidé à travers le trajet de séchage à contre-courant croisé, dans lequel le trajet de séchage est divisé en sections distinctes, dans lesquelles le flux massique du gaz de séchage, lequel est guidé transversalement à travers une section du trajet de séchage, peut être réglé.

8. Procédé selon l'une des revendications 1 à 7, dans lequel l'air ambiant est chauffé, en étant aspiré à travers un arrangement vertical de quatre échangeurs de chaleur en forme de caissons par un souffleur dans une direction essentiellement horizontale et chauffé lors du passage à travers les échangeurs de chaleurs et ensuite aspiré dans la direction verticale par le souffleur disposé sous les échangeurs de chaleurs et acheminé par celui-ci vers la deuxième ou la troisième étape de séchage.

9. Appareil de séchage de copeaux de bois, de déchets de bois hachés ou d'autres matériaux solides en forme de particules d'origine organique et/ou minérale, adapté pour la mise en oeuvre du procédé selon l'une des revendications 1 à 8, comportant :
- une première unité de séchage (101), laquelle est conçue pour présécher le matériau dans une première étape de séchage au moyen d'un premier gaz de séchage préchauffé,
- une deuxième unité de séchage (102), laquelle est conçue pour sécher le matériau séché issu de la première unité de séchage (101) dans une deuxième étape de séchage au moyen d'un deuxième gaz de séchage,
- une troisième unité de séchage (105), laquelle est conçue pour sécher le matériau séché issu de la deuxième unité de séchage (102) dans une troisième étape de séchage au moyen du deuxième gaz de séchage préchauffé et pour acheminer le deuxième gaz de séchage refroidi à une température supérieure à la température ambiante vers la deuxième unité de séchage (102),
- une unité de préparation de gaz (107), laquelle est conçue pour chauffer de l'air ambiant et pour le mettre à la disposition de la troisième unité de séchage (105) en tant que deuxième gaz de séchage préchauffé,
- une unité de refroidissement (106), laquelle est conçue pour refroidir le matériau séché issu de la troisième unité de séchage (105) au moyen d'un gaz de refroidissement, et
- des conduites, lesquelles acheminent le gaz de refroidissement chauffé dans l'unité de refroidissement (106) et/ou le deuxième gaz de séchage refroidi dans la troisième unité de séchage (105) à une température supérieure à la température ambiante vers la première unité de séchage (101) en tant que premier gaz de séchage préchauffé.

10. Appareil selon la revendication 9, comportant un récipient de repos (104), lequel est conçu de telle façon que le matériau séché issu de la première étape de séchage ou de la deuxième étape de séchage est soumis à un temps de repos dans le récipient de repos (104), pendant lequel la teneur en eau à l'intérieur des fragments du matériau est plus ou moins égalisée, dans lequel le matériau est mis à disposition pour le séchage supplémentaire dans la deuxième étape de séchage ou dans la troisième étape de séchage après avoir été soumis au temps de repos.

11. Appareil selon la revendication 9 ou 10, comportant un dispositif de broyage (103), lequel est conçu pour broyer le matériau séché issu de la première unité de séchage (101) ou de la deuxième unité de séchage (102) et pour le mettre à disposition pour le séchage dans la deuxième unité de séchage (102) ou dans la troisième unité de séchage (105).

12. Appareil selon l'une des revendications 9 à 11, comportant une unité de séchage de gaz (108), laquelle est conçue pour sécher le gaz de séchage refroidi et humidifié issu de la deuxième unité de séchage (102) et pour le mettre à la disposition de l'unité de préparation de gaz (107) pour un mélange avec l'air ambiant.

13. Appareil selon l'une des revendications 9 à 12, dans lequel la troisième unité de séchage (105) est reliée à la conduite entre l'unité de refroidissement (106) et la première unité de séchage (101) par le biais d'une conduite, afin de mélanger du deuxième air de séchage refroidi issu de la troisième unité de séchage avec l'air chauffé issu de l'unité de refroidissement (106) et de l'acheminer vers la première unité de séchage (101) en tant que premier air de séchage.

14. Appareil de séchage de copeaux de bois, de déchets de bois hachés ou d'autres matériaux solides en forme de particules d'origine organique et/ou minérale selon l'une des revendications 9 à 13, dans lequel, pour produire un gaz de séchage chauffé, l'unité de préparation de gaz (107) comporte un boîtier parallélépipédique (201) doté de quatre parois latérales verticales (202) disposées à une distance de l'extrémité inférieure, des échangeurs de chaleurs (203) perméables au gaz respectivement dans la direction horizontale, un souffleur (207) disposé sous les échangeurs de chaleurs (203) dans le boîtier (201), avec une entrée d'air (208) sur le côté supérieur et une sortie d'air (209) reliée à une unité de séchage par le biais d'une conduite.

15. Appareil de séchage de copeaux de bois, de déchets de bois hachés ou d'autres matériaux solides en forme de particules d'origine organique et/ou minérale selon l'une des revendications 9 à 14, dans lequel une unité de séchage (101, 102, 105) présente au moins un puits de séchage (302, 303) et des puits de gaz verticaux (301, 304, 305) sur les deux côtés du puits de séchage (302, 303), dans lequel les parois de puits (306 à 309) entre le puits de séchage (302, 303) et les puits de gaz (301, 304, 305) sont perforées, le puits de séchage (302, 303) présente une admission sur le haut pour du matériau à sécher et une évacuation sur le bas pour du matériau séché, l'un au moins des puits de gaz (301, 304, 305) présente une admission de gaz à l'extrémité inférieure et l'un au moins des puits de gaz présente une évacuation de gaz à l'extrémité supérieure, et des dispositifs d'arrêt horizontaux (310) dotés d'une section transversale de passage réglable sont disposés à l'intérieur des puits de gaz (301, 304, 305).

16. Appareil selon la revendication 15, dans lequel l'une au moins des parois de puits (306 à 309) entre le puits de séchage (302, 303) et les puits de gaz (301, 304, 305) est guidée latéralement sur des dispositifs de guidage et reliée à un dispositif de déplacement à l'extrémité supérieure, lequel est conçu pour déplacer la paroi de puits (306 à 309) verticalement vers le haut et vers le bas à l'intérieur des dispositifs de guidage, dans lequel les deux parois de puits (306 à 309) sont de préférence reliées à un dispositif de déplacement à l'extrémité supérieure, dans lequel les dispositifs de déplacement sont synchronisés de manière à déplacer les deux parois de puits (306 à 309) en sens contraire.

17. Appareil selon la revendication 16, dans lequel les dispositifs d'arrêt (310) sont des dispositifs à lamelle(s) respectivement dotés d'au moins une lamelle (311) apte à pivoter autour d'un axe horizontal.

18. Appareil selon l'une des revendications 9 à 17, dans lequel au moins un composant est disposé dans au moins un conteneur (210, 326), dans lequel un conteneur reçoit entièrement ou partiellement un ou plusieurs composants de l'appareil, et/ou dans lequel l'unité de préparation de gaz (107) et/ou l'unité de séchage (101, 102, 105) sont disposées dans un conteneur vertical (210, 326) et/ou dans lequel au moins un élément structurel de l'unité de préparation de gaz et/ou de l'unité de séchage est également un élément structurel du conteneur (210, 326).
